Europäisches Patentamt

European Patent Office

Office européen des brevets

(19)

Veröffentlichungsnummer: **0 290 759**
**A2**

## EUROPÄISCHE PATENTANMELDUNG

(21) Anmeldenummer: **88104594.2**

(22) Anmeldetag: **23.03.88**

(51) Int. Cl.⁴ **B60B 17/00 , B60B 3/08**

(30) Priorität: **14.05.87 DE 3716070**

(43) Veröffentlichungstag der Anmeldung:
**17.11.88 Patentblatt 88/46**

(84) Benannte Vertragsstaaten:
**DE ES FR GB IT SE**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Wackerle, Peter-Martin**
**Attelweg 7**
**D-8019 Assling(DE)**
Erfinder: **Sperber, Franz**
**Schwarzenbergstrasse 29**
**D-8208 Kolbermoor(DE)**
Erfinder: **Gröber, Josef**
**Tannenstrasse 100**
**D-8011 Putzbrunn(DE)**

(54) **Scheibenrad, insbesondere für Schienenfahrzeuge.**

(57) Die Erfindung bezieht sich auf ein Scheibenrad, insbesondere für Schienenfahrzeuge aus einer Metall/Kunststoff-Verbundkonstruktion. Um eine einfache Herstellung bei gleichzeitig guter Krafteinleitung zu ermöglichen, wird gemäß der Erfindung vorgeschlagen, die zwischen Nabe (2) und Laufkranz (3) befindliche Kunststoffstruktur aus zwei Halbschalen (5) gleicher Konstruktion aufzubauen, die sektormäßig durch speichenartige Verstärkungsstege (10) unterteilt sind. Die Verstärkungsstege (10) weisen jeweils einen Längsschlitz (11) auf, in die Stegplatten (13) eingesetzt sind, die beide Halbschalen (5) miteinander verbinden. In die Hohlräume der Halbschalen (5) wird zweckmäßigerweise noch ein Kunststoffschaumblock (14) eingesetzt. Sämtliche Verbindungen zwischen Kunststoffstruktur und Nabe (2) bzw. Laufkranz (3) sind Klebeverbindungen.

FIG. 1

EP 0 290 759 A2

## Scheibenrad, insbesondere für Schienenfahrzeuge

Die Erfindung bezieht sich auf ein Scheibenrad, insbesondere für Schienenfahrzeuge, gemäß dem Oberbegriff des Patentanspruchs 1.

Es ist bekannt, derartige Scheibenräder, z.B. Eisenbahnräder, aus einem Verbund von Metall und faserverstärkten Werkstoffen herzustellen. Beispiele hierfür zeigen die deutschen Patentschriften 33 45 555 und 35 06 007. Durch eine solche Verbundkonstruktion kann das Gewicht der Scheibenräder im Gegensatz zu ansonsten verwendeten reinen Metallrädern verringert werden. Durch die Strukturdämpfung der verwendeten faserverstärkten Werkstoffe werden auch die während des Betriebes auftretenden Lärmbelästigungen reduziert. Außerdem können durch die verwendeten Werkstoffe die während des Betriebes auftretenden Kräfte auf das Scheibenrad in radialer, axialer und Umfangs-Richtung an die geforderten Festigkeits- und Steifigkeitseigenschaften angepaßt werden.

Das Scheibenrad gemäß der erwähnten DE-PS 35 06 007 weist als Schubübertragungskörper einen Z-Stegkörper auf, der z.B. aus mehreren, in Umfangsrichtung des Scheibenrades lückenlos aneinander anschließenden gleichgeformten - schalenförmigen Segmenten besteht, die jeweils mit ihren radial innen-bzw. außenliegenden Seitenwänden an der Nabe bzw. dem Laufkranz im Bereich zwischen dortigen Flanschen und mit ihren sich zwischen Nabe und Laufkranz erstreckenden Seitenwänden an Seitenwänden jeweils benachbarter Segmente anliegen und mit diesen verklebt sind. Die Schalenböden jeweils aufeinanderfolgender Segmente liegen hierbei auf entgegengesetzten Seiten des Scheibenrads. Auf diesen Schubübertragungskörper werden zu beiden Seiten noch Deckscheiben geklebt. Die Hohlräume der Segmente können z.B. mit einem Kunststoff ausgeschäumt werden.

Das Scheibenrad gemäß der oben weiterhin erwähnten DE-PS 33 45 555 weist zwei in axialer Richtung spiegelsymmetrische gleiche Nabenhälften auf, die jeweils an den axialen äußeren Rändern Umfangsflansche aufweisen. Der Schubübertragungskörper ist z.B. eine Wabenstruktur aus Kunststoff, Aluminium oder dergleichen. Die Deckscheiben sind mit den Umfangsflanschen der Nabenhälften jeweils mittels einer zweischnittigen Verbindung verbunden.

Bei beiden bekannten Scheibenrädern werden die einzelnen Teile miteinander verklebt. Andere Verbindungen sind nicht erforderlich. Die Klebungen zwischen Metallteilen und der übrigen Radstruktur aus faserverstärkten Werkstoffen werden allerdings aufgrund der wechselnden Belastungen des Schienenrades im Betrieb auf Querzug belastet.

Die notwendigen Formgebungen der zu verbindenden Metallteile ist insbesondere bei dem Scheibenrad gemäß der DE-PS 33 45 555 noch relativ aufwendig und erfordert einen erhöhten Zerspanungsaufwand, so z.B. Hinterdrehungen.

Das Fertigungsverfahren für das Scheibenrad gemäß der zitierten DE-PS 35 06 007 ist relativ kompliziert, da insbesondere die schalenförmigen Segmente aus faserverstärkten Werkstoffen nur im Naßzustand oder im halbtrockenen Zustand bearbeitet werden.

Der Erfindung liegt die Aufgabe zugrunde, ein Scheibenrad der in Rede stehenden Art anzugeben, dessen Konstruktion einfach ist und ein ebenso einfaches Fertigungsverfahren ermöglicht, so daß Scheibenräder mit einer Verbundkonstruktion aus Metall und Kunststoffen wesentlich zeit- und kostensparender gefertigt werden können. Außerdem soll eine günstigere mechanische Belastung des Scheibenrades im Betrieb erreicht werden. Diese Aufgabe ist gemäß der Erfindung durch die im kennzeichnenden Teil des Patentanspruches 1 angegebenen Merkmale gelöst.

Demgemäß besteht ein Scheibenrad nur aus wenigen Teilen, nämlich zwei Halbschalen, vorzugsweise aus Gewebe-und Kurzfaserlaminat, die in reiner Preßtechnik hergestellt werden, einer der Anzahl der Verstärkungsstege der Halbschalen entsprechenden Anzahl von Stegplatten, die vorzugsweise aus ± 45°-Gewebelaminaten ebenfalls in Preßtechnik hergestellt sind und gegebenenfalls zur Ausfüllung der Hohlräume innerhalb des Scheibenrades aus einzelnen Schaumblöcken, die aus Kunststoff geschäumt bzw. beim Zusammenbau des Rades in die Halbschalen eingesetzt und mit diesen verklebt werden.

Beide Halbschalen werden in ein-und demselben Werkzeug hergestellt. Durch möglichst sparsame Verwendung von Gewebelaminat, bestimmt durch die notwendige Steifigkeitsabstimmung gegen Radial-und Axiallasten, und Einsatz im wesentlichen von wirrfaserverstärkten Preßmassen wird eine sehr günstige Fertigungsweise ermöglicht. Das Zusammenkleben der Halbschalen mit den Verstärkungsstegen und den Stegplatten sowie das Ausschäumen der Hohlräume geschieht vorzugsweise in einem Arbeitsgang in äußerst einfachen Werkzeugen, im wesentlichen zwei Druckplatten. Damit ist der Fertigungsvorgang für die Scheibenstruktur abgeschlossen.

Die Verbindung zwischen der Metallnabe oder Achse sowie dem Laufkranz und der Scheibenstruktur aus den beiden Halbschalen erfolgt in einem weiteren Arbeitsgang. Durch die gewählten Geometrien der Verbindungsflächen an Laufring und Nabe oder Achse ist es möglich durch Einbringen von wirrfaserverstärkter Preßmasse in die vorhandenen Freiräume und Aushärten dieser Masse unter Druck und Temperatur eine form-und kraftschlüssige Verbindung zu schaffen. Bei entsprechender Druckausbildung auf diese Masse während des Pressens wird erreicht, daß das Scheibenrad insgesamt unter Druck vorgespannt wird .

Bei diesem Fertigungsgang wird der Laufkranz auf ca. 80 bis 100°C vorgewärmt, seine Innenkontur wird mit Preßmasse vorgespachtelt. In gleicher Weise wird mit der Nabe bzw. Achse verfahren.

Außenring, Scheibenstruktur und Nabe bzw. Achse werden in einem Werkzeug zusammengesteckt. Durch vorhandene Bohrungen in dem Laufkranz und der Nabe wird die wirrfaserverstärkte Preßmasse in die Hohlräume zwischen der Scheibenstruktur und Nabe bzw. Laufkranz unter erhöhtem Druck eingepreßt. Die Härtung der Preßmasse erfolgt bei ca. 80 bis 100°C in dieser Anordnung. Nach Abkühlung auf Raumtemperatur erhöht sich die Druckspannung in dem Scheibenrad durch den Schrumpf des stählernen Laufkranzes. Durch diese doppelte Druckbeaufschlagung kann erreicht werden, daß die Klebung speziell am Laufkranz nicht querzug-sondern nur noch querdruckbelastet ist. Dies ist ein wesentlich günstigerer Belastungszustand für eine Klebung, besonders unter dem Gesichtspunkt einer hohen dynamischen Strukturfestigkeit.

Durch die konsequente Anwendung der Preßtechnik in einfachen Werkzeugen wird ein wesentlicher Kostenvorteil erreicht.

Weitere Ausgestaltungen der Erfindung gehen aus den Unteransprüchen hervor. Die Erfindung ist in einem Ausführungsbeispiel anhand der Zeichnung näher erläutert. In dieser stellen dar:

Figur 1 eine teilweise aufgeschnittene perspektivische Ansicht eines Scheibenrades gemäß der Erfindung, das aus zwei Halbschalen aufgebaut ist;

Figur 2 eine Explosionsdarstellung der miteinander zu verbindenden Halbschalen für das Scheibenrad;

Figur 3 einen Schnitt längs III-III in Figur 2 und

Figur 4 einen Schnitt durch die Halbschalen im Bereich zwischen Nabe und Laufkranz des Scheibenrades.

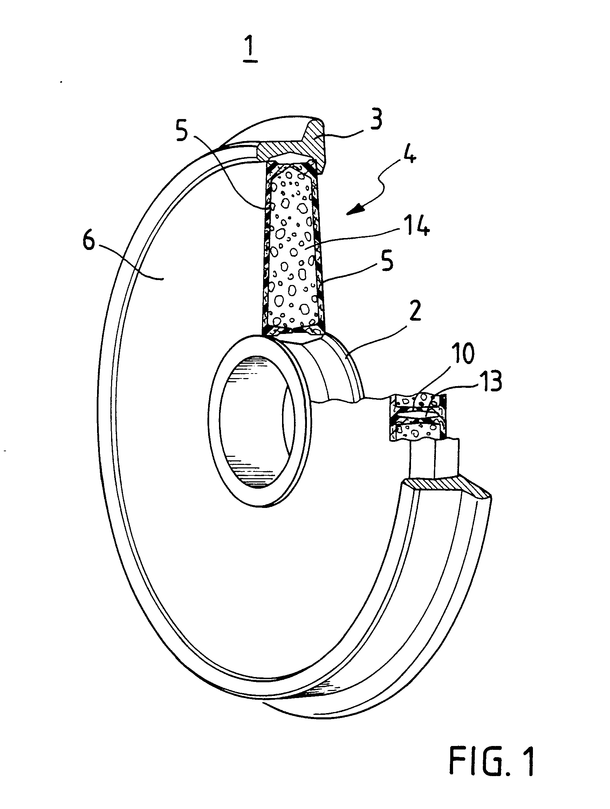

Ein Scheibenrad 1 gemäß Figur 1 besteht aus einer metallenen Nabe 2 und einem metallenen Laufkranz 3, zwischen die ein Schubübertragungskörper 4 eingesetzt ist, der im wesentlichen aus zwei gleichgebauten Halbschalen 5 besteht.

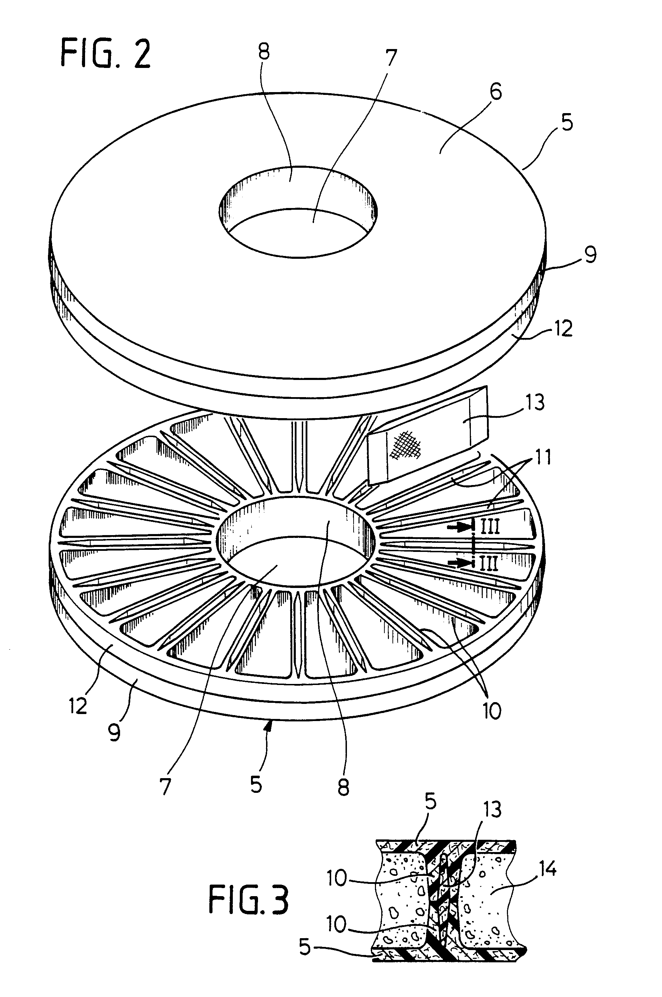

Die Halbschalen sind in Figur 2 gezeigt. Sie weisen einen leicht gewölbten Boden 6 mit einer zentrischen Öffnung 7 für die Nabe sowie einen Innenrandsteg 8 an der zentrischen Öffnung und einen Außenrandsteg 9 auf. Innenrandsteg und Außenrandsteg sind mit radialen speichenartigen Verstärkungsstegen , in diesem Falle 16 Verstärkungsstegen 10 miteinander verbunden, die sich über deren annähernd gesamte Länge erstreckende Längsschlitze 11 aufweisen. Jede Halbschale ist einstückig als Preßteil aus Gewebe-und Kurzfaserlaminat hergestellt. Längs ihres offenen Randes weisen die Halbschalen jeweils eine über ihren gesamten Umfang verlaufende stufenförmige Ausnehmung 12 auf. In die Längsschlitze der Verstärkungsstege 10 werden Stegplatten aus Gewebelaminat mit Faserrichtungen von ± 45° bezogen auf die Stegplattenlängsrichtung eingesetzt und verklebt. Die beiden Halbschalen 5 werden so aufeinander aufgesetzt, daß diese Stegplatten in Längsschlitze beider Halbschalen eingreifen, wie dieses in Figur 3 gezeigt ist. In die Hohlräume zwischen den einzelnen Verstärkungsstegen 10 werden Blöcke aus Kunststoffschaum eingesetzt bzw. die Hohlräume werden über hier nicht gezeigte Öffnungen mit Kunststoff ausgeschäumt.

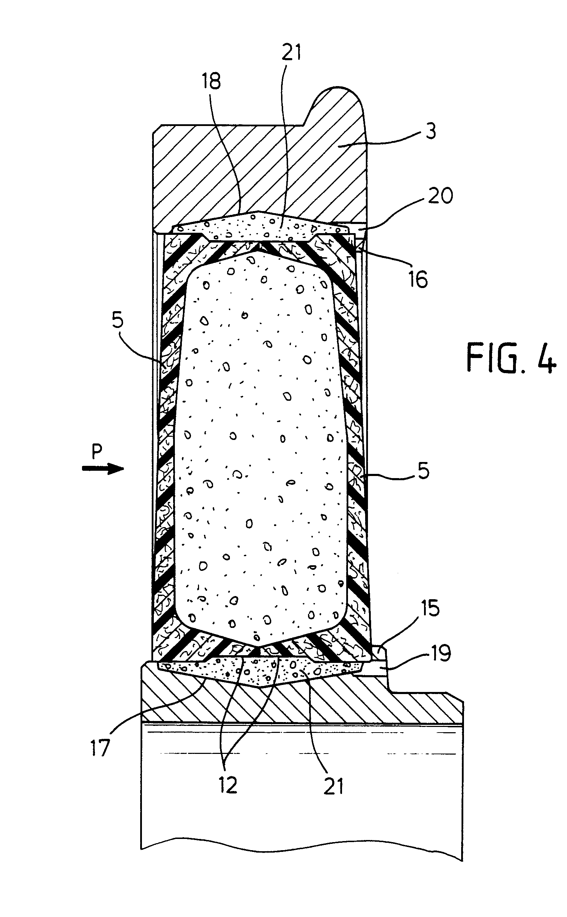

Das gesamte Paket aus den zusammengesetzten und entsprechend behandelten Halbschalen 5 wird gemäß Figur 4 zwischen Nabe 2 und Laufkranz 3 in Pfeilrichtung P eingeschoben. Zur Lagefixierung sind an Nabe und Laufkranz jeweils umlaufende Anschlagflansche 15 bzw. 16 vorgesehen. Die Nabe 2 und der Laufkranz 3 sind an ihren den Halbschalen 5 zugewandten Flächen noch mit im Querschnitt etwa V-förmigen Einschnitten 17 bzw. 18 versehen, die sich annähernd über die gesamte Breite der beiden Halbschalen 5 erstrecken. Auf diese Weise entsteht zwischen den Halbschalen und Nabe bzw. Laufkranz ein Hohlraum, die von außen jeweils über einige Bohrungen 19 bzw. 20 zugänglich sind. Durch diese Bohrungen werden in die Hohlräume Preßmassen 21 aus getränkten Kurzfasern eingepreßt, die ein sichere Verbindung zwischen Halbschalen und Nabe bzw. Laufkranz gewährleisten. Durch die stufenförmigen Ausnehmungen 12 an den Halbschalen wird eine form-und kraftschlüssige Verbindung mit Nabe bzw. Laufkranz über die Preßmasse ermöglicht.

**Ansprüche**

1. Scheibenrad, insbesondere für Schienenfahrzeuge, mit einer Nabe und einem Laufkranz sowie einem Schubübertragungskörper aus faserverstärkten Werkstoffen zwischen Nabe und Laufkranz und zwei Deckscheiben auf entgegengesetzten Seiten des Rades, die sich jeweils zwischen Nabe und Laufkranz erstrecken, den Schubübertragungskörper überdecken und mit Nabe, Laufkranz und Schubübertragungskörper verklebt sind, dadurch gekennzeichnet. daß Schubübertragungskörper (4) und Deckscheiben aus zwei gleichgebauten Halbschalen (5) mit diese sektormäßig unterteilenden speichenartigen Verstärkungsstegen (10) aufgebaut sind, die zwischen Nabe (2) und Laufkranz eingesetzt sind, daß die Verstärkungsstege (10) jeweils einen Längsschlitz (11) aufweisen und daß in die Längsschlitze (11) Stegplatten (13) eingesetzt sind, die beide Halbschalen (5) miteinander verbinden.

2. Scheibenrad nach Anspruch 1, dadurch gekennzeichnet, daß die Halbschalen (5) zwischen Nabe (2) und Laufkranz (3) einen Querschnitt in Form eines gestreckten "C" aufweisen.

3. Scheibenrad nach Anspruch 1 oder 2, dadurch gekennzeichnet, daß an der Umfangsfläche der Nabe (2) und der inneren Umfangsfläche des Laufkranzes (3) um den Umfang laufende Einschnitte (17, 18) vorgesehen sind, denen um den Umfang der Halbschalen laufende stufenförmige Ausnehmungen (12) der aneinandergelegten Halbschalen (5) gegenüberliegen, und daß die Hohlräume zwischen den Einschnitten (17, 18) und den stufenförmigen Ausnehmungen (12) mit einem Verbindungsmaterial, insbesondere mit einer Preßmasse (21) aus harzgetränkten Kurzfasern ausgefüllt sind.

4. Scheibenrad nach einem der vorhergehenden Ansprüche, dadurch gekennzeichnet, daß die Hohlräume in den Halbschalen (5) zwischen den speichenartigen Verstärkungsstegen (10) mit Kunststoffschaum 810) ausgefüllt sind.

1

5　3

4

6　14

5

2

10

13

**FIG. 1**

10 258

# FIG. 2

# FIG. 3

10 258

FIG. 4